# EUROPEAN PATENT SPECIFICATION

(11) **EP 1 227 930 B1**
(45) Date of publication and mention of the grant of the patent: **16.06.2004**
(21) Application number: 99953199.9
(22) Date of filing: 15.10.1999
(51) Int. Cl.: B32B 5/26, B32B 27/04, B32B 27/38, B32B 27/42, B21B 45/02, B60S 1/28, D21G 3/00

(54) **NON-ABRASIVE COMPOSITE DOCTOR BLADE**
ABRIEBFESTER MEHRSCHICHTRAKEL
RACLE COMPOSITE NON ABRASIVE

(43) Date of publication of application: 07.08.2002
(73) Proprietor: Kadant Web Systems Inc., Auburn, MA 01501-0269 (US)
(72) Inventor: BRAUNS, Allen, J., Sturbridge, MA 01566 (US); JACKSON, Stacey, L., Worcester, MA 01604 (US)
(74) Representative: Barnard, Eric Edward
(86) International application number: PCT/US1999/024166
(87) International publication number: WO 2001/028766

(56) References cited:
- US-A- 2 767 529
- US-A- 4 549 933
- DATABASE WPI Section Ch, Week 199404 Derwent Publications Ltd., London, GB; Class A32, AN 1994-031397 XP002220132 & JP 05 338048 A (TEIJIN LTD), 21 December 1993 (1993-12-21)
- DATABASE WPI Section Ch, Week 198002 Derwent Publications Ltd., London, GB; Class A88, AN 1980-02479C XP002220133 & JP 54 149787 A (ICHIKAWA KEORI KK), 24 November 1979 (1979-11-24)

## Description

### BACKGROUND OF THE INVENTION

### 1. Field of the Invention

This invention relates generally to doctors used in papermaking and web converting machines and is concerned in particular with the provision of a composite doctor blade.

### 2. Description of the Prior Art

Doctor blades contact the surface of rolls in papermaking and web converting machines for the purpose of cleaning or sheet removal. Conventional doctor blade materials include metals, homogenous plastics, and cotton, glass and carbon thermoset laminates. Metal blades, although inexpensive, can cause damage or premature wear with some roll surfaces. Many of the water removal rolls on the wet end have a relatively soft rubber cover measured at 10 P&J and softer. Typically, these rolls are doctored with homogeneous plastic doctor blades, such as ultra-high molecular weight polyethylene ("UHMW polyethylene").

Plastic blades are generally thick, 3mm to 6mm (1/8" to 1/4"), compared to metals and glass and carbon thermoset laminates which are typically 1.25mm to 2mm (0.050" to 0.080") thick. The additional thickness of the homogeneous plastics is required to achieve sufficient machine-direction rigidity for reliable doctoring. However, when compared to thinner blades, a thick doctor blade suffers a loss in doctoring performance due to the decreased contact pressure between the blade and the roll. Cotton laminates, like homogeneous plastics, are relatively thick and have the associated disadvantages. To eliminate some of the problems associated with thick plastic or cotton blades, glass and carbon laminates are often used. Glass laminates are rigid and can therefore be made thin for efficient doctoring. The main disadvantage with glass laminates is that the glass wear particles produced are abrasive, which can unintentionally alter or cause excessive wear with some roll surfaces, especially soft wet end rolls. Carbon laminates have the advantage of being very rigid and non-abrasive. However, carbon laminates are expensive and not always economical for widespread use in the wet end of the paper machine. Therefore, it was necessary to develop a thin and non-abrasive composite doctor blade to efficiently doctor soft wet end rolls on the paper machine.

Coater blades may be in contact with a moving sheet of paper or other material. At the point of blade contact, the sheet is supported by a rotating coater backing roll. The coater blade is used in a wiping mode to meter a layer of liquid on to a sheet of paper or other material. With some coating machines, the coater blade meters a layer of liquid directly on a roll surface and then the coating is transferred to the sheet of material at a later point. The coater blade is held in a holder similar to a doctor blade. The metered liquid or coating thickness is dependent on the amount of pressure applied to the trailing edge of the coater blade. An increased amount of pressure will decrease the coating thickness. Conventional coater blade materials include steel, stainless steel and steel with a treated edge for prolonging the useful life.

U.S. Patent No. 4,549,933 shows a doctor blade having non-homogeneous stiffness properties. U.S. Patent No. 2,767,529 shows a polishing doctor blade composed of alternate frangible and wear resisting laminations of mildly abrasive and non-abrasive materials, respectively.

### SUMMARY OF THE INVENTION

Briefly, a doctor blade is configured for application to the surface of a rotating roll in a paper making machine. The doctor blade is a multiplayer composite having an inner core and intermediate layers on opposite sides of the core. The doctor blade may also include outer layers overlying the intermediate layers. The inner core is predominantly polymeric thermoplastic or thermoset material which lies on the neutral axis of the blade. The intermediate layers include reinforcing fibers. The side edge of said doctor blade has an abrasiveness as measured by ASTM test method D5181-91 of between about 4.0 to 5.0.

It is the object of the invention to provide a thin, multi-layered doctor or coater blade utilizing both layers of thermoset or thermoplastic material and reinforcing material, bound together with thermoset resin in a sandwich type construction.

Another object of the present invention is to provide a doctor blade which is relatively thin yet has sufficient machine-direction rigidity for efficient doctoring or coating application.

Still yet another objective of the present invention is to provide a non-abrasive blade which is beneficial for both maintaining the roll surface roughness in its original condition and prolonging the roll life.

These and other objectives, features and advantages of the present invention will be apparent in light of the following detailed description of preferred embodiments thereof, as illustrated in the accompanying drawings.

### BRIEF DESCRIPTION OF THE DRAWINGS

Fig. 1 is a side view of a doctor blade assembly in contact with a rotating roll in accordance with the present invention;
Fig. 2 is a side view of the doctor blade in contact with the rotating roll;
Fig. 3 is a sectional view of a blade in contact with a roll in a wiping mode in a coater application;
Fig. 4 is an enlarged exploded perspective view of the components of a doctor blade in accordance with the present invention;
Fig. 5 is a perspective view of the doctor blade of Fig. 4;
Fig. 6 is an exploded perspective view of an alternative embodiment; and
Fig. 7 is an exploded perspective view of another alternative embodiment.

### DETAILED DESCRIPTION OF THE INVENTION

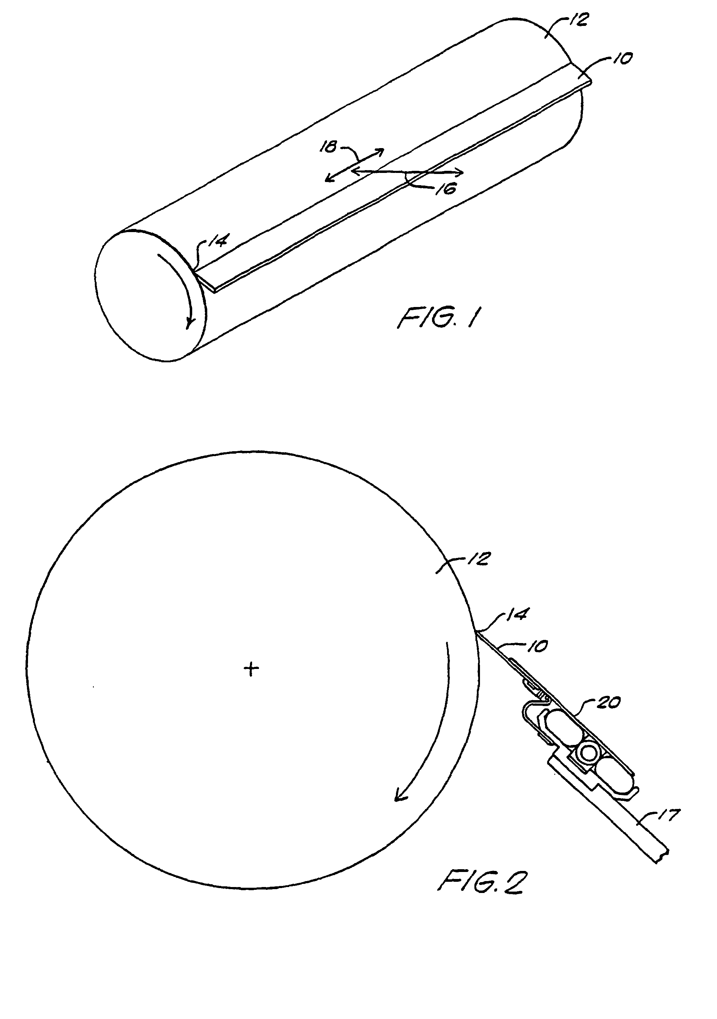

With reference initially to Fig. 1, a doctor blade 10 is shown in contact with a rotating roll 12 for the purpose of cleaning, sheet removal or other similar operations. A leading bevelled edge 14 of the doctor blade 10 contacts the surface of the rotating roll 12. The "machine direction" denoted by the arrow 16, is the direction that is perpendicular to the roll axis. The "cross machine direction" denoted by the arrow 18, is the direction parallel to the roll axis. Fig. 2 shows a side view of a doctor assembly which includes an elongated blade 10 and a doctor blade holder 20 attached to a rigid doctor structure 17.

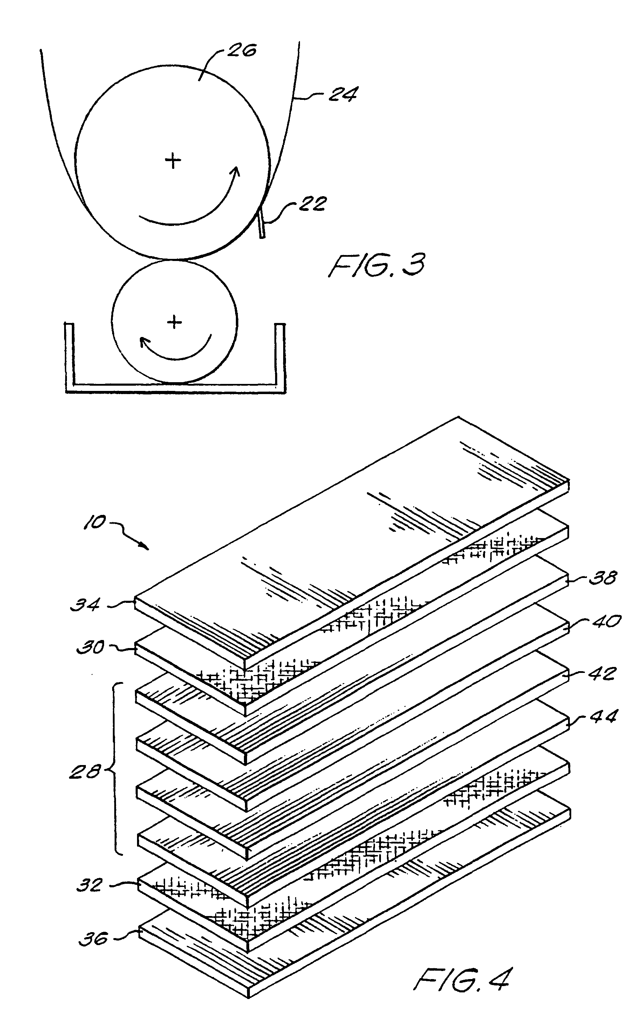

Fig. 3 shows a coater blade 22 in contact with a moving sheet of paper or other material 24. At the point of blade contact, the sheet 24 is supported by a rotating coater backing roll 26. The coater blade 22 is used in a wiping mode to meter a layer of liquid on to a sheet of paper or other material 24. The appearance of the coater blade 22 is similar to that of the doctor blade. The invention described throughout relates to both doctor and coater blades. In the description that follows, it is intended that the wording "doctor blade" apply to both doctor and coater blades.

A composite doctor blade 10 in accordance with the present invention is shown in Figs. 4-7 as comprising multiple layers in a sandwich type construction. The doctor blade 10 consists of an inner core 28 and intermediate layers 30, 32 on opposite sides of the core. The doctor blade 10 may alternatively include outer layers 34, 36 overlying the intermediate layers 30, 32. The layers are mechanically bonded to each other with a resin. The resin may be a thermoset resin such as an epoxy, phenolic, polyester or a polyimide.

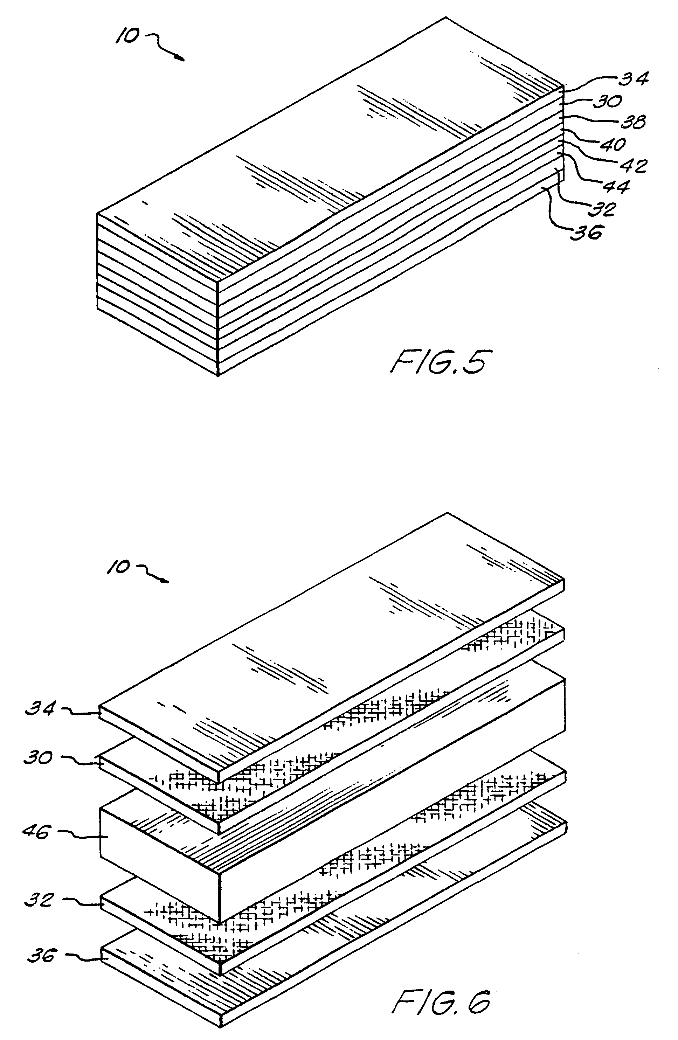

The core 28 can consist of multiple layers indicated by layers 38, 40, 42 and 44, or as a single homogeneous layer 46 as shown in Fig. 6. The core 28 is centered on the neutral axis. The core 28 may consist of individual layers of a woven or non-woven plastic or homogeneous layers of plastic bound together. As an alternative, one or more layers of a reinforcing or high strength material such as carbon may be placed within the core for added strength, stability or wear performance.

The core thickness is in the range of 0.127mm to 3.6mm (0.005° to 0.140"). The total core thickness required is dependent on the desired total thickness, flexural strength and flexural modulus or rigidity of the desired doctor blade 10. Polymeric materials, specifically thermoset or thermoplastic materials such as polyester, UHMW polyethylene, nylon, Teflon® (tetrafluoroethylene fluorocarbon or "TFE"), aromatic polyamides and other such materials can be used as the core material 28. The core material 28 is chosen such that it is compatible with the roll surface to be doctored. When selecting the core material 28, the degree to which the core material resists wear and the capability of the core material to wear with a clean sharp edge are important considerations. The core material 28 must also be resistant to attach from any chemicals present, temperature, humidity and the general operating environment.

Intermediate layers 30 and 32 are comprised of reinforcing or high strength fibers and are spaced away from the neutral axis by the core 28. The flexural properties of the finished doctor blade 10 are a function of the distance between layers 30 and 32 and the neutral axis. Intermediate layers 30 and 32 can utilize unidirectional or multi-directional fibers. The thickness and fiber orientation are selected to achieve the desired flexural properties. In the majority of doctoring applications, the machine-direction strength and rigidity of the doctor blade are critical for efficient cleaning of the roll surface and sheet removal. Therefore, the preferred fiber orientation is biased in the machine direction. Carbon is the preferred fiber, however, other fibrous, high strength materials such as Kevlar® an aromatic polyamide fiber, could be utilized. As with the core 28, the intermediate materials must be compatible with the roll surface and the general operating environment.

The outer layers 34, 36 are adjacent to the intermediate layers 30, 32. The outer layers provide a finished appearance on the exposed doctor blade surfaces. The outer layers 34, 36 also serve to keep the intermediate layers 30, 32 bound securely to the core 28. It is preferred that the outer layers 34, 36 be of the same material as the core 28 although a material different than that of the core could also be used. As with the core 28 and the intermediate layers 30, 32, it is important that the outer layer material be compatible with the operating environment.

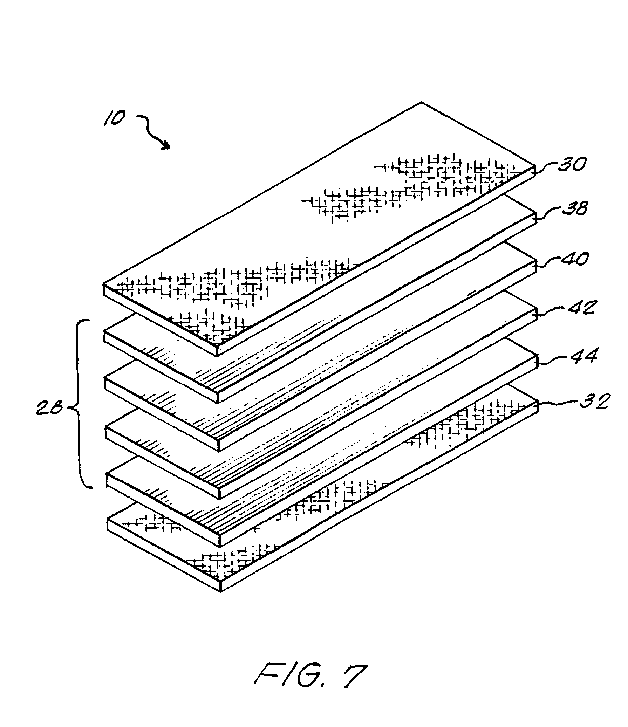

An alternative embodiment is shown in Fig. 7 wherein the doctor blade is constructed without the outer layers 34 and 36 so that the intermediate layers of reinforcing or high strength layers 30 and 32 would be the exposed blade surfaces.

The doctor blade 10 has a thickness ranging from 0.38mm to 3.8mm (0.015" to 0.150") and a flexural modulus of between 276-1034 x 10⁸ Pa (40-150 x 10⁵ psi) [tested according to ASTM test method D-790]. A preferred thickness of the blade 10 is 1.27mm (0.050") with a flexural modulus of between 517-689 x 10⁸ Pa (75-100 x 10⁵ psi).

The abrasiveness of the doctor blade was tested according to ASTM test method D5181-91. The test is based on a scale of 1-10, 1 being the least abrasive. The doctor blade 10 has an abrasiveness between about 4.0 and 5.0.

### Example 1

Three different doctor blades were to be tested and compared for abrasivity. Each sample was prepared by aligning and clamping together seven doctor blades of the same material.

Sample 1 was Graflex™, prepared according to U.S. Patent No. 4,549,933 and including outer layers of woven glass, intermediate layers of unidirectional carbon in the machine direction and a core of woven glass.

Sample 2 was prepared in accordance with the invention and including outer layers of non-woven polyester fibers, intermediate layers of unidirectional carbon in the machine direction, and a core of woven polyester fibers surrounding unidirectional carbon in the cross machine direction.

Sample 3 was Fiberflex® wherein all layers were woven fiberglass.

In all three samples the materials were bonded with epoxy resin. The blades were approximately 1.27mm (0.050") thick and thus the bundles were approximately 8.9mm (0.350") thick. The blades were tested as bundles to have a larger surface area to test. The abrasiveness of the blades were tested using standard receptors B-2-2 (tan) and B-3-2 (blue) with the following results:
Sample 2 - 4.6
Sample 1 - 5.3
Sample 3 - 6.0

The blade prepared according to the invention, Sample 2, was the least abrasive.

The doctor blades are relatively thin yet have sufficient machine-direction rigidity for efficient doctoring or coating application. The materials used in the construction of the blade are non-abrasive in nature. The non-abrasive characteristic is beneficial for both maintaining the roll surface roughness in its original condition and prolonging roll life when the roll surface to be doctored is relatively soft. Also, in doctoring or coating applications with a lubricating liquid present, the use of plastic combined with carbon helps to lengthen the useful life of the blade by reducing the wear rate.

## Claims

1. An elongated doctor blade having a side edge configured for application to the surface of a rotating roll in a paper making machine, said doctor blade being a multiplayer composite comprising:
a) an inner core of predominantly polymeric thermoplastic or thermoset material lying on the neutral axis of said blade; and
b) intermediate layers on opposite sides of said core, said intermediate layers including reinforcing fibers, the side edge of said doctor blade having an abrasiveness as measured by ASTM test method D5181-91 of between 4.0 and 5.0.

2. The doctor blade as claimed in claim 1 further **characterized by** a machine direction flexural modulus of between 276 - 1034 x 10⁸ Pa (40 - 150 x 10⁵ psi).

3. The doctor blade as claimed in claim 2 wherein the machine direction flexural modulus is between 517 - 689 x 10⁸ Pa (75 - 100 x 10⁵ psi) and the thickness of said doctor blade is approximately 1.27mm (0.050").

4. The doctor blade as claimed in claim 1 wherein said inner core comprises a single homogeneous layer.

5. The doctor blade as claimed in claim 1 wherein said inner core comprises a plurality of layers.

6. The doctor blade as claimed in claims 4 or 5 wherein said plastic material is a woven fabric.

7. The doctor blade as claimed in any one of the preceding claims wherein said polymeric material is selected from the group comprising polyester, UHMW polyethylene, nylon, polytetrafluoroethylene, or aromatic polyamides.

8. The doctor blade as claimed in claim 5 wherein said inner core includes layers reinforced with a high strength material.

9. The doctor blade as claimed in claim 8 wherein said high strength material is selected from the group consisting of carbon or aromatic polyamides.

10. The doctor blade as claimed in claim 1 wherein said inner core has a thickness ranging from 0.127 to 3.6mm (0.005 to 0.140").

11. The doctor blade as claimed in claim 1 wherein said doctor blade has a thickness ranging from 0.38 to 3.8mm (0.015 to 0.150").

12. The doctor blade as claimed in claim 1 wherein said doctor blade has a thickness of approximately 1.27mm (0.050").

13. The doctor blade as claimed in claim 1 wherein said layers are mechanically bonded to each other with a resin.

14. The doctor blade as claimed in claim 13 wherein said resin is a thermoset resin.

15. The doctor blade as claimed in claim 14 wherein said thermoset resin is selected from the group consisting of epoxy, phenolic, polyester and polyimides.

16. The doctor blade as claimed in claim 1 wherein said reinforcing fibers are oriented in the machine direction.

17. An elongated doctor blade according to any preceding claim further comprising outer layers overlying said intermediate layers.

18. The elongated doctor blade as claimed in claim 17 wherein said outer layers are the same material as the core layers.

19. The elongated doctor blade as claimed in claim 17 wherein said outer layers are made from polyester, UHMW polyethylene, nylon, polytetrafluoroethylene, or aromatic polyamides.

## Patentansprüche

1. Ein lang ausgedehntes Abstreifmesser, welches eine Seitenkante aufweist, die für eine Anwendung an der Oberfläche einer sich drehenden Walze in einer Papiermaschine konfiguriert ist, wobei das Abstreifmesser ein Verbundwerkstoff aus mehreren Schichten ist, umfassend:
a) einen inneren Kern aus einem vorwiegend polymerischen thermoplastischen oder Duroplast-Werkstoff, welcher auf der neutralen Achse des gesagten Messers liegt, und
b) mittlere Schichten auf entgegengesetzten Seiten des gesagten Kerns, wobei die mittleren Schichten Verstärkungsfasern umfassen, und die Seitenkante des gesagten Abstreifmessers eine Abrasivität, gemessen durch das ASTM-Testverfahren D5181-91, zwischen 4,0 und 5,0 aufweist.

2. Das Abstreifmesser, wie beansprucht in Anspruch 1, ferner **gekennzeichnet durch** einen Biegemodul in Bearbeitungsrichtung zwischen 276 bis 1034 x 10⁸ Pa (40 bis 150 x 10⁵ psi).

3. Das Abstreifmesser, wie beansprucht in Anspruch 2, wobei der Biegemodul in Bearbeitungsrichtung zwischen 517 bis 689 x 10⁸ Pa (75 bis 100 x 10⁵ psi) liegt und die Dicke des gesagten Abstreifmessers näherungsweise 1,27 Millimeter (0,050") beträgt.

4. Das Abstreifmesser, wie beansprucht in Anspruch 1, wobei der gesagte innere Kern eine einzige homogene Schicht umfasst.

5. Das Abstreifmesser, wie beansprucht in Anspruch 1, wobei der gesagte innere Kern eine Vielzahl von Schichten umfasst.

6. Das Abstreifmesser, wie beansprucht in Anspruch 4 oder 5, wobei der gesagte Kunststoffwerkstoff ein gewebter Stoff ist.

7. Das Abstreifmesser, wie beansprucht in einem der vorhergehenden Ansprüche, wobei der gesagte polymerische Werkstoff ausgewählt ist aus der Gruppe, welche Polyester, UHMW-Polyethylen, Nylon, Polytetrafluorethylen oder aromatische Polyamide umfasst.

8. Das Abstreifmesser, wie beansprucht in Anspruch 5, wobei der gesagte innere Kern Schichten umfasst, welche mit einem hochfesten Werkstoff verstärkt sind.

9. Das Abstreifmesser, wie beansprucht in Anspruch 8, wobei der gesagte hochfeste Werkstoff aus der Gruppe ausgewählt ist, welche aus Kohlenstoff oder aromatischen Polyamiden besteht.

10. Das Abstreifmesser, wie beansprucht in Anspruch 1, wobei der gesagte innere Kern eine Dicke im Bereich von 0,127 bis 3,6 Millimeter (0,005 bis 0,140") aufweist.

11. Das Abstreifmesser, wie beansprucht in Anspruch 1, wobei das gesagte Abstreifmesser eine Dicke im Bereich von 0,38 bis 3,8 Millimeter (0,015 bis 0,150") aufweist.

12. Das Abstreifmesser, wie beansprucht in Anspruch 1, wobei das gesagte Abstreifmesser eine Dicke von näherungsweise 1,27 Millimeter (0,050") aufweist.

13. Das Abstreifmesser, wie beansprucht in Anspruch 1, wobei die gesagten Schichten mechanisch aneinander mit einem Harz verklebt sind.

14. Das Abstreifmesser, wie beansprucht in Anspruch 13, wobei der gesagte Harz ein wärmeaushärtender Harz ist.

15. Das Abstreifmesser, wie beansprucht in Anspruch 14, wobei der gesagte wärmeaushärtende Harz aus der Gruppe ausgewählt ist, welche aus Epoxidharz, Phenolharz, Polyester und Polyimiden besteht.

16. Das Abstreifmesser, wie beansprucht in Anspruch 1, wobei die gesagten Verstärkungsfasern in der Bearbeitungsrichtung ausgerichtet sind.

17. Ein lang ausgedehntes Abstreifmesser gemäß einem der vorhergehenden Ansprüche, weiterhin umfassend äußere Schichten, welche auf den mittleren Schichten liegen.

18. Das lang ausgestreckte Abstreifmesser, wie beansprucht in Anspruch 17, wobei die gesagten äußeren Schichten aus demselben Werkstoff wie die Kernschichten ausgebildet sind.

19. Das lang ausgestreckte Abstreifmesser, wie beansprucht in Anspruch 17, wobei die äußeren Schichten aus Polyester, UHMW-Polyethylen, Nylon, Polytetrafluorethylen oder aromatischen Polyamiden hergestellt sind.

## Revendications

1. Lame de racle oblongue, ayant un bord latéral configuré pour l'application à la surface d'un rouleau tournant dans une machine de fabrication de papier, la lame de racle étant un composite à couches multiples comprenant :
a) une âme intérieure de façon prépondérante en une matière polymère thermoplastique ou thermodurcie se trouvant sur l'axe neutre de la lame ;
b) des couches intermédiaires sur des côtés opposés de l'âme, les couches intermédiaires comprenant des fibres de renfort, le bord latéral de la lame de racle ayant un pouvoir abrasif tel que mesuré par la méthode d'essai ASTM D5181-91 compris entre 4,0 et 5,0.

2. Lame de racle telle que revendiquée à la revendication 1 **caractérisé, en outre, par** un module de flexion dans la direction machine compris entre 276 et 1034 x 10⁸ Pa (40 à 150 x 10⁵ livres par pouce carré).

3. Lame de racle telle que revendiquée suivant la revendication 2, dans laquelle le module de flexion dans la direction machine est compris entre 517 et 689 x 10⁸ Pa (75 à 100 x 10⁵ livres par pouce carré) et l'épaisseur de la lame de racle est d'environ 1,27 mm (0,050 pouce).

4. Lame de racle telle que revendiquée suivant la revendication 1, dans laquelle l'âme intérieure comprend une couche homogène unique.

5. Lame de racle telle que revendiquée suivant la revendication 1, dans laquelle l'âme intérieure comprend une pluralité de couches.

6. Lame de racle telle que revendiquée suivant la revendication 4 ou 5, dans laquelle la matière plastique est un tissu tissé.

7. Lame de racle telle que revendiquée suivant l'une quelconque des revendications précédentes, dans laquelle la matière polymère est choisie dans le groupe comprenant du polyester, du polyéthylène UHMW, du nylon, du polytétrafluoroéthylène ou des polyamides aromatiques.

8. Lame de racle telle que revendiquée suivant la revendication 5, dans laquelle l'âme intérieure comprend des couches renforcées par une matière de grande résistance mécanique.

9. Lame de racle telle que revendiquée suivant la revendication 8, dans laquelle la matière de grande résistance mécanique est choisie dans le groupe consistant en du carbone ou des polyamides aromatiques.

10. Lame de racle telle que revendiquée suivant la revendication 1, dans laquelle l'âme intérieure a une épaisseur allant de 0,127 à 3,6 mm (0,005 à 0,140 pouce).

11. Lame de racle telle que revendiquée suivant la revendication 1, dans laquelle la lame de racle a une épaisseur allant de 0,38 mm à 3,8 mm (0, 015 à 0,150 pouce).

12. Lame de racle telle que revendiquée suivant la revendication 1, dans laquelle la lame de racle a une épaisseur d'environ 1,27 mm (0,050 pouce).

13. Lame de racle telle que revendiquée suivant la revendication 1, dans laquelle les couches sont liées mécaniquement l'une à l'autre par une résine.

14. Lame de racle telle que revendiquée suivant la revendication 13, dans laquelle la résine est une résine thermodurcie.

15. Lame de racle telle que revendiquée suivant la revendication 14, dans laquelle la résine thermodurcie est choisie dans le groupe consistant en une résine époxy, en une résine phénolique, en une résine de polyester et en des polyimides.

16. Lame de racle telle que revendiquée suivant la revendication 1, dans laquelle les fibres de renfort sont orientées dans la direction machine.

17. Lame de racle oblongue suivant l'une quelconque des revendications précédentes, comprenant, en outre, des couches extérieures recouvrant les couches intermédiaires.

18. Lame de racle oblongue suivant la revendication 17, dans laquelle les couches extérieures sont en la même matière que les couches de l'âme.

19. Lame de racle oblongue suivant la revendication 17, dans laquelle les couches extérieures sont en polyester, en polyéthylène UHMW, en nylon, en polytétrafluoroéthylène ou en polyamides aromatiques
